# EUROPEAN PATENT APPLICATION

(11) **EP 3 348 148 A1**
(43) Date of publication of application: **18.07.2018**
(21) Application number: 16843743.2
(22) Date of filing: 28.06.2016
(51) Int. Cl.: A23L 2/10, A23L 2/395, A23L 3/46, A23L 3/54

(54) **METHOD FOR ENCAPSULATING POLYPHENOLS OF YELLOW PITAHAYA (SELENICEREUS MEGALANTHUS**

(30) Priority: 07.09.2015 CO 15210115
(71) Applicant: Universidad La Gran Colombia Seccional Armenia, Bogota 110311 (CO)
(72) Inventor: SERNA JIMENEZ, Johanna Andrea, Bogota DC 110311 (CO); TORRES VALENZUELA, Laura Sofia, Bogota DC 110311 (CO)
(74) Representative: Capitán García, Maria Nuria
(86) International application number: PCT/IB2016/053857
(87) International publication number: WO 2017/042642

(57) **Abstract**

This invention corresponds to the field of Chemistry, and specifically, to treatment of foods stuffs to stabilize bio-components, such as those polyphenols with a recognized capability to link reactive species of oxygen associated to development of chronic and degenerative diseases, such as cancer, which bio-components have been considered as antioxidant polyphenols. In particular, the invention proposes a specific solution of an obtained stable product which involves electro-spray drying or spray drying for stable conservation of yellow pitahaya polyphenol biocomponents, as a proposed solution of unique temperature, times and stages, which in addition has its own Syringe for the electro spraying system.

## Description

### TECHNOLOGICAL SPHERE

This invention corresponds to the field of Chemistry, and specifically, to treatment of foods stuffs to stabilize bio-components, such as those polyphenols with a recognized capability to link reactive species of oxygen associated to development of chronic and degenerative diseases, such as cancer, which bio-components have been considered as antioxidant polyphenols. In particular, the invention proposes a specific solution of an obtained stable product which involves electro-spray drying or spray drying for stable conservation of yellow pitahaya polyphenol biocomponents, as a proposed solution of unique temperature, times and stages, which in addition has its own Syringe for the electro spraying system.

### PRIOR ART

Polyphenol bio-compounds with antioxidant features have been identified in perishable products, such as fruit and vegetables; therefore, a solution to extend bio-stability of bio-compounds for therapeutic or industrial applications is required. Polyphenols antioxidant capacity is reduced by environmental factors such as temperature, light, pH, or oxygen; it is necessary to establish applicable and scalable methodologies in order to extend their shelf life and ensure a therapeutic effect. Encapsulation is known as a probable response to extend characteristics of a bio-compound through a technique that contributes to mitigate these adverse effects, but there is no a specific process of stabilization of components which ensures bio-availability as the one of this invention.

There are products for stabilization of non-volatile biocomponents or solutions to obtain powder compounds from fruit or vegetables, but they do not ensure stability, there are also processes for identification and spray drying of various biocomponents bearing antioxidant capacity; however, there are no specific solutions of a process and obtained stable product which includes Electrospray drying or spray drying for stable conservation of these biocomponents of yellow pitahaya, as the solution proposed ion this invention, which in addition has its own syringe for the electro-spraying system.

The differentiating factor of this invention is associated to specific conditions of the process, and to adoption of processes where high temperature is not used.

Encapsulation is defined as the process of trapping a substances named active agent within other substance named wall material. The encapsulated substance is named nucleus, filling, internal phase or active useful load; the encapsulating substance is named coating, membrane, shell, support material, external phase, or matrix. Encapsulation is a suitable method for application in a wide range of active ingredients in pharmaceutical applications and food stuffs technology, therefore, a great variety of encapsulation methods have been researched; in general, an encapsulation process of bioactive agents involves three aspects: i) formation of the wall around the material to be encapsulated; ii) ensuring prevention of internal phase from escaping, and; iii) ensuring that non-desirable material are kept outside.

Various encapsulation methods have been reported. Encapsulation through spray drying has been the most reported method in foods stuffs industry, due to process simplicity, scalability, and low cost. Current encapsulation techniques include spray drying, cold spraying, extrusion, fluidized bed, co-assertivation, trapping in liposomes, freeze-drying or co-crystallization.

Within reported encapsulation methods, spray drying is the most used method in food stuff industry, because it is flexible, continuous, and the most important thing: it is an economic operation.

### Encapsulation through spray drying

This method has been used in food stuff industry since the 50s. It represents advantages due to process flexibility, operation continuity, and good quality particle production; therefore, it is widely used in food stuff industry microencapsulation; 80-90% of encapsulated products are obtained through this means. However, disadvantage of the process is posed by equipment complexity, heterogeneous conditions of the drying chamber, and difficulty to control the particle size.

For the encapsulation process the external phase is solubilized and homogenized later with the internal phase. The mixture is fed within a spray drying chamber through a nozzle. Water is evaporated by the contact of sprayed material with hot air; finally, the material is collected after passing through a cyclone.

### Encapsulation through co-jetting technique

An encapsulation alternative is electro-spraying, which uses a magnetic field to disperse a solution through an electrostatic force in the fed material, which produces a fine spray capable of forming micro and nanoparticles. This method is used in areas of Biology, cells, encapsulation of antioxidants, and production of particles with alginate.

This technique does not use high temperature for particle formation; therefore, its adverse effects on thermo-sensible components may be avoided.

The process is subdivided into two stages. In the first stage, it is produced a drop of the product pumped with a low caudal to at the tip of the needle; in the second stage, a cone, of Taylor cone is produced, when such drop begins to fall by gravity effect, and this forced added to the electrical one work against surface tension of the drop making it disperse in small particles of radios lower than the initial one, producing an electrostatic atomization.

Particles positively charged migrate to the drop surface and the negative ones accumulate in its interior until the electric field inside them is zero. The separation load will produce a force which is blocked by superficial tension within the drop. Motion velocity of these ionic species through the liquid is determined by the electric field magnitude and ionic mobility of the substance.

There are a number of patents involving spray drying of various compounds with antioxidant capacity; however, so far there are not works which include using Electro-spray drying or Spray drying for conservation of these biocomponents. The encapsulation process may be performed through spray drying, as the most widely encapsulation technique used in food stuff industry, since it is flexible, continuous, and the most important thing: it is an economic operation. Most encapsulated stuffs are dried through spray, but the rest of them are prepared through cold pulverization, freeze drying, and extrusion. There are other techniques, such as molecular inclusion on cyclodextrins, and liposome vesicles, but they are more expensive technologies, and therefore, they are less used.

Antecedent US 6.783.781 B2 of Douglas G. Mann's method of stabilizing fruit-concentrate powders is a vacuum system different from current process, where studied products, stabilize non-volatile components which do not contain polyphenols such as color, odor, flavor, using as a cooperating of the process a raw material other than maltodextrin (salts gums). Fruit concentrated products are entered into the system (high SST content), unlike current process, non-concentrated juice. Just conditions of spray drying process are evaluated, but not characteristics of fresh juice and powder; therefore, biocomponents conservation is not guaranteed.

Publication of patent WO 2013/140382 A2 Fruit juice powder mix and process for making the same of Pepsico India Holdings Pvt. Ltd., works with fruit concentrated products, and the purpose is to produce powder components, but not protecting biocomponents. They use maltodextrin as a drying cooperator in a very wide rank, while in current invention, the process conditions of the process are established, and it is not developed for yellow pitahaya. Stabilizing gums are added (Arabic gum and Xantan), and these steps are eliminated in current development. Spray drying temperature is higher than the one used in this work, (150°C - 180 °C). Just conditions of spray drying process are evaluated, but not characteristics of fresh juice and in powder, therefore, conservation of biocomponents is ensured.

### DESCRIPTION OF THE INVENTION

For execution of the invention, the following figures and specific stages for encapsulation and stabilization of polyphenols, taking yellow pitahaya as an example, are presented:

### Figure 1:

Figure 1: shows all phases of extraction and stabilization of biocomponents process

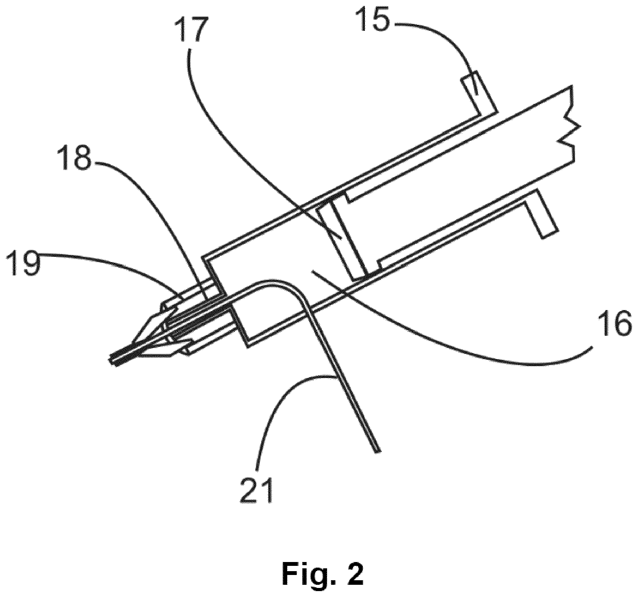

Figure 2: shows the modified syringe for the electrospray system
Figure 3: shows encapsulation conditions of eight treatments of yellow pitahaya with a variation of four temperatures and two types of encapsulation material.
Figure 4: shows an experimental design of three phases of drying and spray encapsulation.
Figure 5: shows pictures of yellow pitahaya electrospray capsules.
Figure 6: shows a table of concentration encapsulation maltodextrin on spray drying for eight treatments of yellow pitahaya stabilization.
Figure 7: shows a table with total polyphenols content average (mg GAE/100 g m.s.) for yellow pitahaya encapsulation treatments.
Figure 8: shows a table of vitamin C content average (mg ac. Ascórbico/ g m.s.) for for yellow pitahaya encapsulation treatments.
Figure 9: shows a table of average antioxidant capacity (%) for yellow pitahaya encapsulation treatments.

Yellow pitahaya, as a specific case, is a cactaceous from tropical and subtropical America. This fruit is native of Mexico, Central America and South America, and it is cultivated in the Asian Southeastern; it contains essential fat acids such as oleic acid, linoleic and linolenic, and cis-vaccenic acid. Yellow pitahaya contains large amount of phenolic compounds and ascorbic acid, its consumption may be associated to nutraceutic properties of food, produced by the effect against free radicals that reduce the risk of chronic diseases; in addition, it is a fruit rich in polyphenols which are antioxidant compounds. Medicinal effects are reported, such as reduction of uric acid, intestinal transit improvement, heart strengthening, and nerve sedative. Laxative capacity of pitahaya stems and seeds is related to presence of mucilage, fat compounds (sterols), and insoluble fiber. This fruit pulp has been subject to various industrialization alternatives, such as syrup, osmotic dehydration, freeze drying, refracting window drying, convective drying, among other. However, the eatable part is reduced regarding the total of the plant; in addition, 12-day commercial life times are reported.

This invention encapsulates through spray drying parting from sub-products, in order to obtain bioactive compounds of a functional interest found in pitahaya through the use of feasible technology. Parting from results of analyzed antioxidant properties of parts of yellow pitahaya, (Selenicereus megalanthus Haw), it is suggested as an important source of compounds with functional properties, their use in food stuffs functionalization an alternative for production of added value to this food stuff.

Regarding encapsulation temperature effect and concentration of maltodextrin used as encapsulating agent on water activity, humidity content and functional components evaluated and their stability in storing, applied treatments led to reduce water activity and humidity content. By means of encapsulation, concentration of total polyphenols content was also achieved, and conservation of their antioxidant capacity; otherwise happened to Vitamin C content, where none of the treatments kept this compound. Most stability in the time of components, such as total polyphenols content and antioxidant capacity of encapsulated yellow pitahaya, with the invention is between 120°C and 50% of maltodextrin, and 150°C with 40% of maltodextrin, respectively.

Regarding controlled release under simulation of the human stomach and small intestine, it was established that there was no release of vitamin C, taking into account its non-preservation by encapsulation effect, while a minimal part of total polyphenols were released in the stomach, there was a minor release of encapsulated material at 103°C and with 40% of maltodextrin. Likewise, there was higher release of polyphenols in the small intestine simulated by the encapsulated material under these conditions.

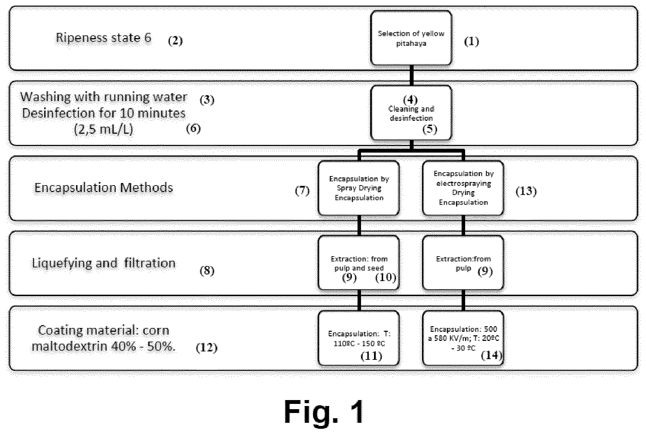

Figure 1, shows all phases of extraction and stabilization of biocomponents, following the steps for Spray Drying Encapsulation listed below:

### SPRAY DRYING ENCAPSULATION

- Selection of yellow pitahaya (1) in ripeness state 6 (2)
- Cleaning (3) washing with running water (4) and Disinfection (5) for 10 minutes with a mixture of natural origin sanitizing such as citric seed extract, and organic acids (6) (2,5 mL/L)
- Selection of Spray Drying Encapsulation (7)
- Liquefying and filtration (8) of pulp (9) and seed (10).
- Encapsulation using temperature (11) between 110°C and 150°C with corn maltodextrin (12), between 40% to 50% at a pressure of 5 bar, and 80°C output temperature.

In turn, the phases of biocomponents extraction and stabilization by electro spraying follow the steps listed below:

### ELECTRO SPRAY DRYING ENCAPSULATION

- Selection of yellow pitahaya (1) in ripeness state 6 (2)
- Cleaning (3) washing with running water (4) and Disinfection (5) for 10 minutes with a mixture of natural origin sanitizing such as citric seed extract, and organic acids (6) (2,5 mL/L)
- Selection of Electro Spray Encapsulation (7)
- Liquefying and filtration (8) of pulp (9)
- Encapsulation using temperature (14) between 20°C and 30°C electricity since 500 KV/m a 580 KV/m with corn maltodextrin (12), between 40% to 50%

As a better method of executing the invention in the state of biocomponents extraction, it is performed the mixture of pulling material for each biocomponent according to the following phases:

### Phase 1: Extraction of pulp, solvents in the following conditions:

Ripe yellow pitahaya (Selenicereus megalanthus Haw) was used 6. Fruit pieces were cleaned and disinfected. Fruit pieces were washed using running water and a bristle brush; then fruit pieces were disinfected through immersion for 10 minutes into a solution at a concentration of 2.5 mL/L of natural origin sanitizing mixture, such as extract of citric seeds and organic acids.

The extraction process was performed through filtration homogenization, the initial process by liquefying the pulp and seeds in a blender, and later filtration using a 400-micra net.

The encapsulation stage following protocols for encapsulation through two different methods.

### Phase 2: Encapsulation

Pitahaya pulp and seeds, previously homogenized, are mixed with corn maltodextrin at 40% and 50% concentration, and room temperature; this is the raw material to feed the two different methods of encapsulation.

Step 2.1: Drying through electrospraying, specific conditions: Yellow pitahaya extract was performed following the extraction process (Phase 1), and the encapsulating solution 1 (16) was placed in a 10mL syringe (15) under its piston (17). A corn maltrodextrin solution was prepared at a concentration of 40% and 50%, and taken to ultrasound washing for 10 minutes, and later placed in a 10 mL plastic syringe (15); this mixture is named Solution 2.

The solution 1 (16) and solution 2 were introduced into an electro spraying system through a coaxial capillary system. The internal capillary (18) is made of a 900-micromilimeter diameter Teflon fiber, the outer capillary (19) is a 16-caliber steel needle.

The pitahaya juice (21) is pumped by the internal capillary (18), and the maltodextrin solution by the external capillary (19), to constitute the wall material of the capsules (22). The two solutions are pumped to the system by using independent syringe pumps (15). The system is connected to a high voltage source.

The process was performed by feeding Solution 1 (16) between 1,2mL/h and 1,5 mL/h and solution 2 between 1,0 mL/h and 1,2 mL/h and an electromagnetic field of 500 KV/m to 580 KV/m. The whole process is performed at a temperature of 20 °C to 30 °C.

Step 2.2: Spray drying, conditions: encapsulation through spray drying was performed by using spray drying equipment, at a temperature of 110 °C y 150 °C, 5-bar pressure, and output temperature of 80°C.

Phase 3 of quantification and tracking shelf life bioavailability is evidenced.

Phase 4. The product is stored for stabilization under storing conditions of a temperatura between 38°C and 42°C, and relative humidity between 55% and 65%.

The process does not use any solvents, but they are required to quantify the result of biocomponents.

Quality standards such as water activity and humidity content suggest an estimated real shelf life of 4 days, as well as for total polyphenols content, antioxidant capacity of encapsulated material suggests an approximated shelf life of 7 days. According to the above, an analysis of shelf life is performed by using different types of packing, in order to allow product stability for a longer time.

The following examples and results are provided in order to clarify the invention:

### Example 1

It was determined the maltodextrin to be used for encapsulation of biocomponents of yellow pitahaya, according to preliminary studies of encapsulation and performance.

Yellow pitahaya (Selenicereus megalanthus), in ripeness state 6 was used according to NTC 3554. In order to obtain the functional bioactive component of yellow pitahaya for encapsulation, it was quantified the presence of polyphenols and antioxidants of 4 parts of the pitahaya: pulp, seeds, peel, and stems; and the part of the plant showing higher amount of the component was selected.

Polyphenols presence was determined through Folin-Ciocalteu method reported by Jara et al (2014), where 0.25 mL of extract, 0.25 mL of Folin-Ciocalteu and 3.25 mL of Na2CO3 at 20% were used, it was stirred and left in repose for 2 hours. Polyphenols quantification was performed in an UV-vis HP a 765 nm. Spectrophotometer. Results are expressed on mg of gallic acid (GAE), for each 100 g of dry sample.

Vitamin C content was determined through colorimetric method of the 2-nitroaniline described by Bernal (1994), by using an UV Scanning Genesys Spectrophotometer (Thermo Scientific, USA). Obtained results are expressed in mg of ascorbic acid for each gram of dry sample.

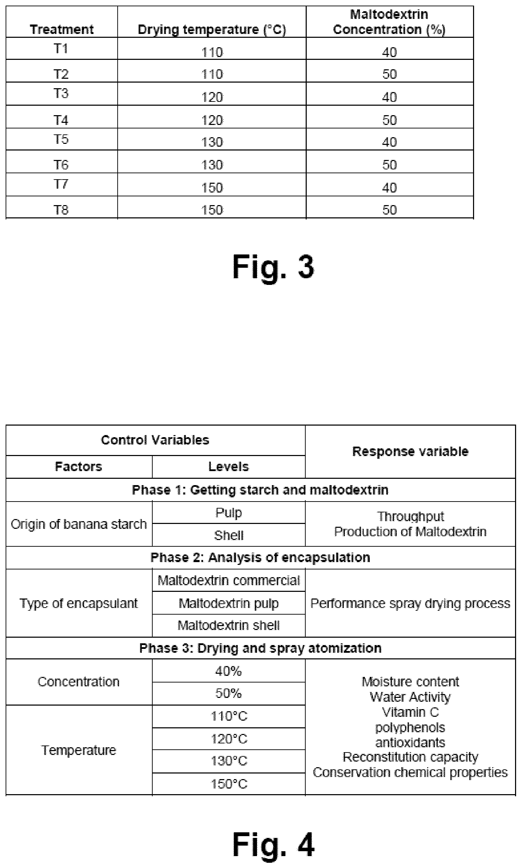

Selected products to perform the encapsulation were subject to spray drying process in a dryer. Four drying temperature were evaluated, (110°C, 120°C, 130°C y 150°C), and commercial maltodextrin, and maltodextrin extracted from plantain were used as coating material, under two concentrations of the encapsulating material (40% and 50%); defined according to non-reported preliminary studies, where under these conditions there were no problems at the time of drying. Figure 3 shows the evaluated treatments.

Water activity (aw) was determined through the dew point method using a water activity meter Aqualab Lite (Decagon, USA); and humidity content was determined through the gravimetric method following AOAC 934.06 standard, by using a stove (Binder, USA), and analytical scale (Mettler Toledo, Switzerland).

Vitamin C content was determined through the colorimetric method of the 2-nitroaniline using an Genesys UV Scanning Genesys Spectrophotometer (Thermo Scientific, USA).

Polyphenols and antioxidant capacity were determined through Folin-Ciocalteu method reported by Jara (2014). Antioxidant capacity was determined through ABTS method (azin-obis 3-ethylbenzoathialine-6-sulphonic acid), adding 2 mL of ABTS solution to 50 µL of extract, it us stirred and allowed to react for 30 minutes in the darkness. Quantification was performed by using a Genesys UV Scanning Genesys Spectrophotometer (Thermo Scientific, USA), at 732 nm.

Evaluation of storing stability of functional bioactive compounds was performed in an environmental chamber at 40% and 60% of relative humidity. Tracking was performed each day until achieving a loss of 50% of at least one of the quantified components.

### Simulation of bioactive component release

Simulation of bioactive component release of encapsulated material in human digestive tract was performed by using gastric fluids extracted from the pig (bile), under laboratory controlled conditions of temperature and pH similar to the ones of human stomach and intestine.

In order to obtain extracts parting from encapsulated material a solution of encapsulated material was prepared (0,1 g in 3 mL of water), it was homogenized in a vortex. A 100µL aliquota was taken as sample and 1,5 mL of ethanol, homogenized for one minute, and centrifuged for 10 minutes. Release of functional components of encapsulated material was determined by quantifying vitamin C content and total polyphenols of the extracts, according to the above described methodology. The procedure was tracking for two hours until any component reduced in more than 50%.

### Experimental design

A sequential factor design was performed; factors and levels of each phase are shown in figure 4; it shows a three-phase experimental design table of drying and spray encapsulation.

Results were analyzed through a variance analysis at a significance level of 95%, with comparison of means through Tuckey, using Statgraphics statistical software.

The final results of the product was a stabilized biocomponent with an increase of shelf life higher than 1000 per cent; concentration of biocomponents increasing availability, little or none termal affactation, and obtention of micro and nano particles.

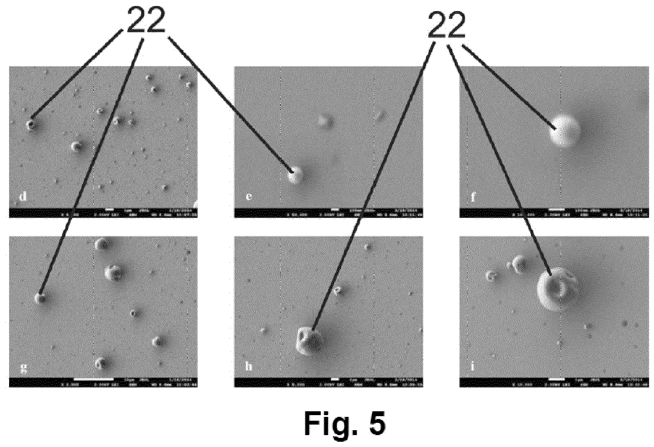

The product obtained by electrospraying capsules are capsules sizing between 100 nm and 1000nm, round shaped, and presence of invaginations as observed on figure 5, with maltodextrin coating located in the outer part of the material.

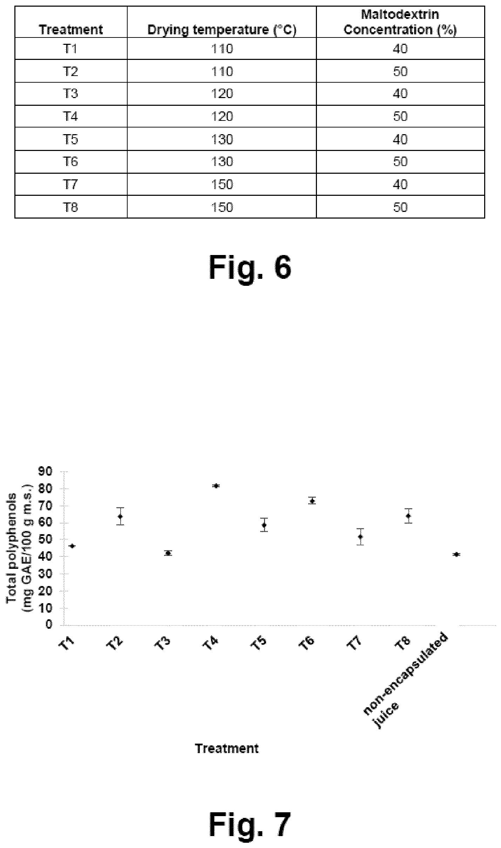

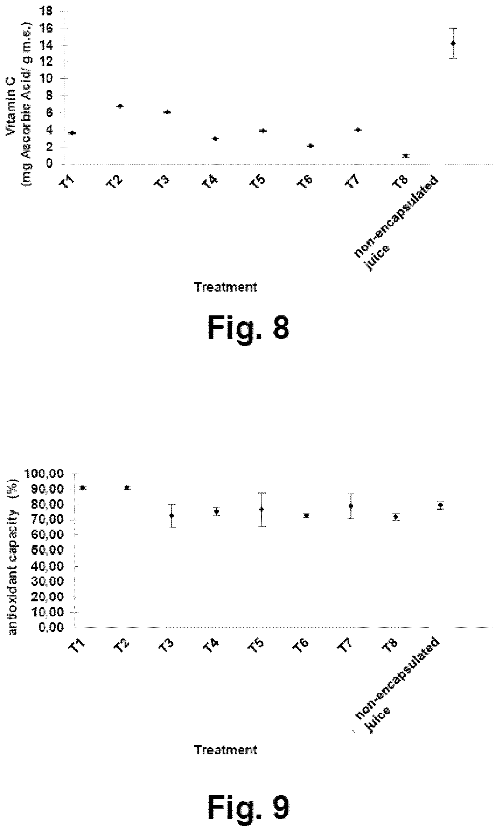

Figure 6 shows a table of maltrodextrin concentration of spray drying encapsulation for eight treatments of yellow pitahaya stabilization; figure 7 shows a table with total polyphenols content (mg GAE/100 g m.s.) average for yellow pitahaya encapsulation treatments; and figure 9 shows a table with antioxidant capacity (%) average for average for yellow pitahaya encapsulation treatments.

## Claims

1. Encapsulation and production of functional products by components stabilization with antioxidant capacity CHARACTERIZED because it follows the following steps of Spray Drying Encapsulation (7):
• Selection of yellow pitahaya (1) in ripeness state 6 (2)
• Cleaning (3) washing with running water (4) and Disinfection (5) for 10 minutes with a mixture of natural origin sanitizing such as citric seed extract, and organic acids (6) (2,5 mL/L)
• Spray Drying (7) of substances
• Liquefying and filtration (8) of pulp (9) and seed (10).
• Encapsulation using temperature (11) between 110°C and 150°C with corn maltodextrin (12), between 40% to 50% at a pressure of 5 bar, and 80°C output temperature.

2. Encapsulation and production of functional products by stabilization of biocomponents with antioxidant capacity CHARACTERIZED because it follows the following steps of electrospraying Drying Encapsulation (13):
• Selection of yellow pitahaya (1) in ripeness state 6 (2)
• Cleaning (3) washing with running water (4) and Disinfection (5) for 10 minutes with a mixture of natural origin sanitizing such as citric seed extract, and organic acids (6) (2,5 mL/L)
• Electrospray drying (13) of substances
• Liquefying and filtration (8) of pulp (9)
• Encapsulation using temperature (14) between 20°C and 30°C electricity since 500 KV/m a 580 KV/m with corn maltodextrin (12), between 40% to 50%

3. Encapsulation and production of functional products by stabilization of biocomponents with antioxidant capacity according to claim 1 or 2 CHARACTERIZED because the extraction process is performed by filtrate homogenization, the initial process by liquefying pulp and seeds in a blender, and subsequent filtration in a 400 micra net.

4. Encapsulation and production of functional products by stabilization of biocomponents with antioxidant capacity according to claim 2 CHARACTERIZED because the encapsulating solution 1 (16) was placed in a 10mL syringe (15) under its piston (17), a corn maltrodextrin solution is prepared at a concentration of 40% and 50%, and taken to ultrasound washing for 10 minutes, and later placed in a 10 mL plastic syringe (15); this mixture is named Solution 2.

5. Encapsulation and production of functional products by stabilization of biocomponents with antioxidant capacity according to claim 2, **CHARACTERIZED by** a syringe with a coaxial capillary system for mixture of solutions, where the internal capillary (18) is a 900-micromilimeter diameter Teflon fiber, and the outer capillary is a 16-caliber steel needle.

6. Encapsulation and production of functional products by stabilization of biocomponents with antioxidant capacity according to claim 2, CHARACTERIZED because the pitahaya juice (21) is pumped by the internal capillary (18), and the maltodextrin solution by the outer capillary (19) which makes the wall material of the capsules (22).

7. Encapsulation and production of functional products by stabilization of biocomponents with antioxidant capacity according to claim 2, CHARACTERIZED because solutions are pumped to the system using independent syringe pumps (15) connected to a high voltage source; feeding of solution 1 (16) between 1,2mL/h and 1,5 mL/h and the solution 2 between 1,0 m/L and 1,2 mL/h and an electromagnetic field of 500 KV/m to 580 KV/m. The whole process is performed at 20 °C to 30 °C temperature.

8. Encapsulation and production of functional products by stabilization of biocomponents with antioxidant capacity according to claim 1 or 2 CHARACTERIZED because the stabilized product has apolyphenol content with antioxidant capacity of the encapsulated material with a useful life of 7 days.
